# EUROPÄISCHE PATENTSCHRIFT

(11) **EP 1 423 606 B1**
(45) Veröffentlichungstag und Bekanntmachung des Hinweises auf die Patenterteilung: **20.04.2005**
(21) Anmeldenummer: 02796262.0
(22) Anmeldetag: 22.08.2002
(51) Int. Cl.: F03D 1/06, F03D 7/02, F03D 11/00, F16C 33/66

(54) **SCHMIERUNG FÜR DIE ANSTELLWINKELVERSTELLEINRICHTUNG EINES ROTORBLATTES EINER WINDTURBINE**
LUBRICATION OF A PITCH ANGLE ADJUSTING DEVICE OF A ROTOR BLADE OF A WINDMILL
LUBRIFICATION POUR DISPOSITIF DE REGLAGE D'ANGLE D'ATTAQUE SUR UNE PALE DE ROTOR D'EOLIENNE

(30) Priorität: 25.08.2001 DE 10141667
(43) Veröffentlichungstag der Anmeldung: 02.06.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/009367
(87) Internationale Veröffentlichungsnummer: WO 2003/019004

(56) Entgegenhaltungen:
- DE-A- 2 931 348
- DE-C- 19 634 059
- DE-U- 20 021 026
- FR-A- 2 275 704
- US-A- 3 811 577
- US-A- 5 957 000
- PATENT ABSTRACTS OF JAPAN vol. 2000, no. 07, 29. September 2000 (2000-09-29) & JP 2000 110197 A (SHIN CATERPILLAR MITSUBISHI LTD), 18. April 2000 (2000-04-18)

## Beschreibung

Die vorliegende Erfindung betrifft eine Vorrichtung zum Verdrehen eines Rotorblattes einer Windenergieanlage gegen eine Nabe der Windenergieanlage mit einer Lagerung zwischen den Bauteilen und mit einem Zahnrad-Antrieb zum Betätigen der Verdrehung zum Einstellen des Pitch-Winkels eines Rotorblattes einer Windenergieanlage.

Um an einer Vorrichtung zwei Bauteile gegeneinander zu verdrehen, müssen diese zueinander drehbar gelagert sein, was sich bekanntlich z.B. mittels einer Gleitlagerung oder einer Wälzlagerung bewerkstelligen lässt. Um den Verschleiß in der Lagerung möglichst gering zu halten, ist bekanntlich eine Schmierung der Lagerung erforderlich. Um die Verdrehung zwischen den Bauteilen zu betätigen, benötigt es außerdem einen Antrieb, der sich bekanntlich z.B. durch ein Zahnradgetriebe realisieren lässt. Soweit es sich bei dem Zahnradgetriebe nicht um Kunststoffzahnräder handelt, die nur geringe Drehmomente übertragen können, ist auch bei einem solchen Getriebe eine Schmierung zum Vermindern von Verschleiß erforderlich.

Für die Schmierung werden der Vorrichtung bekanntlich Schmierstoffe zugeführt, und zwar entweder nur beim Aufbau der Vorrichtung, was als sogenannte Lebensdauer-Schmierung z.B. für Wälzlager bekannt ist, oder in bestimmten Intervallen, was jeweils einen Wartungseingriff üblicherweise durch geschultes Personal erforderlich macht.

Als Stand der Technik wird an dieser Stelle allgemein auf folgende Druckschriften hingewiesen: DE36 25 840 A1, DE196 34 059 C1; DE 200 21 026 U1; DE 44 32 986 A1; DE 37 32 730 C1; DE 44 44 535 A1. Die vorgenannten Druckschriften beleuchten u.a. auch den technologischen Hintergrund der vorliegenden Erfindung.

Ein besonderer Anwendungsfall einer Vorrichtung zum Verdrehen von zwei Bauteilen gegeneinander ist eine Vorrichtung zum Verdrehen eines Rotorblattes einer Windenergieanlage um die Blattlängsachse gegenüber der Rotornabe der Windenergieanlage zum Einstellen des sogenannten Pitch-Winkels, also des Anstellwinkels des Rotorblattes gegenüber der Windrichtung, in die der Rotor ausgerichtet ist. Hier üben vom Wind am Rotorblatt erzeugte Kräfte ein beträchtlich großes Biegemoment auf die Lagerung aus, was beim Verdrehen auch den Verschleiß negativ beeinflusst. Des weiteren muss der Verdrehantrieb nicht zuletzt wegen dieser beträchtlichen Biegemomente ein großes Verdreh-Moment erzeugen, und für den Verdrehantrieb steht an der Blattwurzel, wo auch die Lagerung angeordnet ist, nur ein verhältnismäßig geringer Bauraum zur Verfügung. Die sowohl für die Lagerung als auch für den Verdreh-Antrieb erforderliche Schmierung ist wegen katastrophaler Folgen bei Beschädigung und folglichem Versagen z.B. aufgrund von übermäßigem Verschleiß besonders kritisch und daher sorgfältig durchzuführen. Wegen schlechter Zugänglichkeit des zu schmierenden Bereichs ist die sorgfältige Schmierung aber auch besonders aufwendig.

Der vorliegenden Erfindung liegt die Aufgabe zugrunde, bei einer Vorrichtung zum Verdrehen eines Rotorblattes einer Windenergieanlage gegen eine Nabe der Windenergieanlage die Schmierung von Lagerung und Antrieb zu verbessern.

Diese Aufgabe wird erfindungsgemäß durch eine Vorrichtung mit den in Anspruch 1 beschriebenen Merkmalen gelöst. Bevorzugte Ausgestaltungen der Erfindung sind in den Unteransprüchen angegeben.

Erfindungsgemäß sind bei einer Vorrichtung zum Verdrehen eines ersten Bauteils gegen ein zweites Bauteil eine Lagerung zwischen den Bauteilen und ein Zahnrad eines Antriebes der Verdrehung im Volumenbereich einer Schmiermittelkammer angeordnet. Die zu schmierende Lagerung und das zu schmierende Zahnrad liegen folglich örtlich dicht beieinander, so dass ein Schmiermittel, das dem Zahnrad und/oder der Lagerung zugeführt ist, sich zwischen dem Lager und dem Zahnrad verteilt und austauscht. Vorzugsweise kann das Schmiermittel der Lagerung zugeführt werden und verteilt sich dann von dort auf das Zahnrad.

Insbesondere in dem Fall, dass die Lagerung und das Zahnrad der Vorrichtung koaxial und/oder im wesentlichen in einer zu ihrer Achse senkrechten Ebene angeordnet sind - was z.B. bei einer erfindungsgemäßen Vorrichtung zur Verstellung des Pitch-Winkels am Rotorblatt einer Windenergieanlage vorzugsweise der Fall ist - liegen die Zähne des Zahnrades des Verdrehantriebs und die Wälzkörper der bevorzugten Wälzlagerung - insbesondere eines zweireihigen Kugellagers - im Querschnitt der Vorrichtung von einer Schmiermittelkammerwandung umgeben so dicht beieinander, dass Schmiermittel sich durch die Schmiermittelkammer von den Wälzkörpem auf die Verzahnung verteilen kann.

Die Erfindung wird beispielhaft im folgenden mit Bezug auf die beigefügten Zeichnungen beschrieben.
Figur 1 zeigt einen Querschnitt durch eine erfindungsgemäße Vorrichtung zum Verdrehen eines Rotorblattes einer Windenergieanlage gegenüber deren Rotomabe und
Figur 2 zeigt einen Querschnitt durch die Lagerung und das Zahnrad der Vorrichtung gemäß Figur 1 als Ausschnitt aus Figur 1.
Figur 3 zeigt einen Blick auf die Unterseite eines Wälzlagers;
Figur 4 zeigt einen Querschnitt durch die Lager und das Zahnrad einer erfindungsgemäßen Schmierfettzuführung.

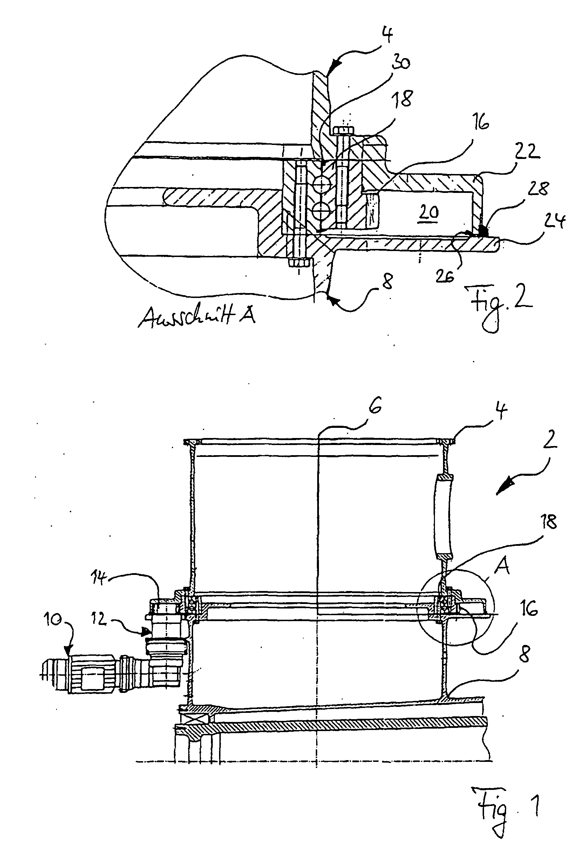

Figur 1 zeigt eine Vorrichtung 2 zum Verdrehen der Blattwurzel 4 eines Rotorblatts (nicht dargestellt) einer Windenergieanlage um die Rotorblattlängsachse 6 gegenüber der Nabe 8 der Windenergieanlage. Erkennbar ist in Figur 1 insbesondere auch ein Elektromotor 10, der über ein Getriebe 12 die Verdrehung betätigt. Dabei greift ein Ritzel 14 des Getriebes 12 in ein Zahnrad 16 ein, das mit Blick auf Figur 2 im dort dargestellten Ausschnitt der Figur 1 besser erkennbar ist. Auch die Verdrehlagerung in Gestalt eines zweireihigen Kugellagers 18 ist in Figur 2 besonders deutlich zu sehen.

Mit Blick auf Figur 1 und 2 wird außerdem erkennbar, dass gemessen am Durchmesser des Wälzlagers 18 und des Zahnrades 16 um die Achse 6 (Figur 1) der Abstand zwischen den Wälzkörpem des Lagers 18 und den Zähnen des Zahnrades 16 im Querschnitt (Figur 2) sehr gering ist. In dem Querschnitt gemäß Figur 2 befinden sich die Lagerung 18 und die Verzahnung 16 im Volumenbereich einer Schmiermittelkammer 20, durch die sich Schmierfett von den Wälzkörpern 18 auf kurzem Wege und in genügendem Vorrat auf die Verzahnung 16 verteilen kann. Die Schmiermittelkammer 20 ist also eine mit dem Lager 18 und dem Zahnrad 16 um die Achse 6 koaxiale, kreisringförmige Kammer mit zwei radial äußeren Wandungsbereichen 22, 24 von denen einer 22 an der Rotorblattwurzel 4 und einer 24 an der Rotornabe 8 befestigt ist. Die Wandungsbereiche 22, 24 sind durch einen Spalt 26 voneinander getrennt, der die Verdrehung der beiden Wandungsteile 22, 24 mit dem Rotorblatt 4 und der Nabe 8 ermöglicht und durch einen Dichtungsring 28 abgedichtet ist. Radial nach innen verläuft die Trennfuge zwischen den Wandungsbereichen 22 und 24 mit der Fuge zwischen den Wälzlagerschalen des Wälzlagers 18 und ist dort durch eine Wälzlagerdichtung 30 abgedichtet.

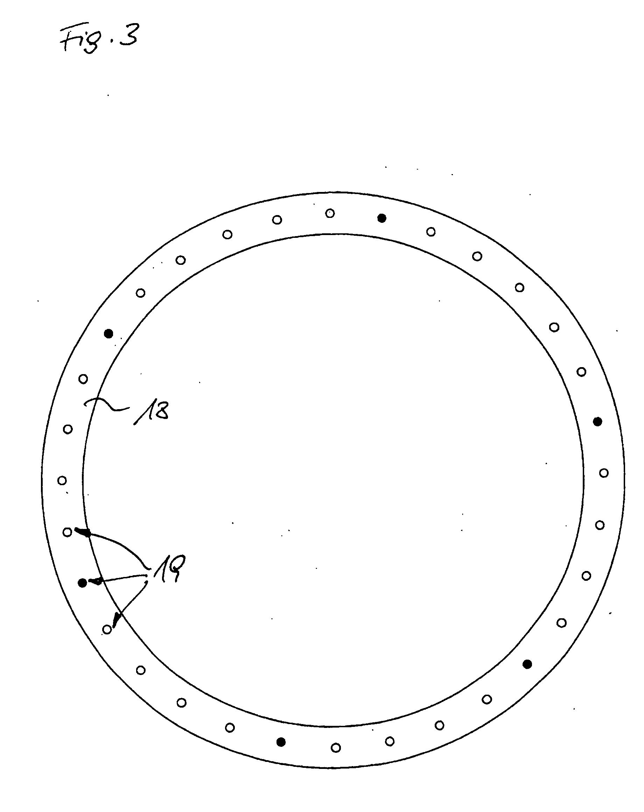

Figur 3 zeigt vereinfacht einen Blick auf die Unterseite des Wälzlagers 18. In diesem Wälzlager 18 sind Bohrungen 19 angeordnet. Die Mehrzahl dieser Bohrungen 19 sind Durchgangsbohrungen. Ein Teil dieser Bohrungen ist allerdings als Sackbohrung ausgeführt. Durch die Durchgangsbohrungen wird das Wälzlager mit einem der Lagerpartner verschraubt, während die Sackbohrungen, die in der Figur 3 als schwarz gefüllte Kreise dargestellt sind, nicht für die Befestigung an dem Lagerpartner, sondem zum Zuführen des Schmiermittels für das Wälzlager vorgesehen sind.

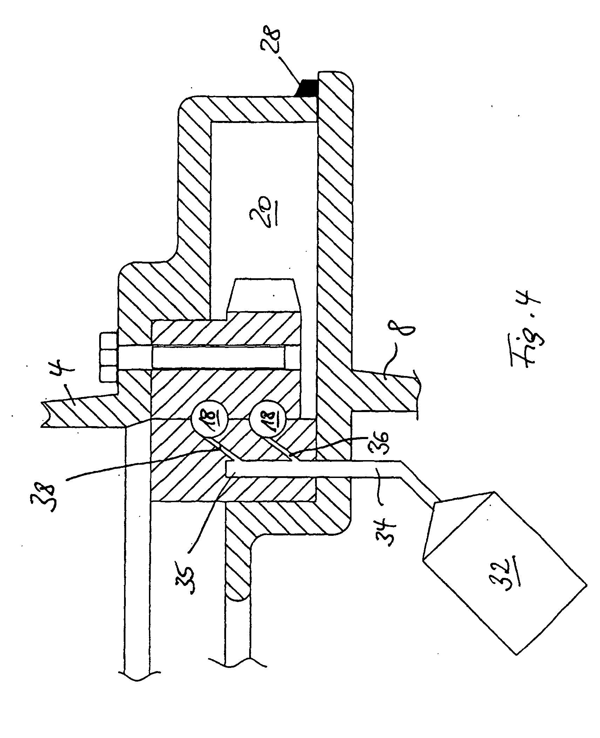

Fig. 4 zeigt die Nabe 8, die Blattwurzel 4 und das dazwischen angeordnete Wälzlager 18. In dieser Figur ist die Sackbohrung mit dem Bezugszeichen 35 bezeichnet. Hier wird erfindungsgemäß nicht eine Schraube verwendet, um eine Verbindung zwischen den Lagerpartnern herzustellen, sondern eine Schmierfettkartusche 32 (Schmiermittelreservoir) ist über eine Zuführungsleitung 34 mit der Sackbohrung 35 verbunden. Von der Sackbohrung 35 verläuft ein erster Kanal 36 und zweiter Kanal 38 zu den Wälzkörpem, die in dieser Figur mit dem Bezugszeichen 18 bezeichnet sind. Das unter Druck aus der Schmierfettkartusche 32 herausgepresste Schmiermittel gelangt also durch die Zuführungsleitung 34 und die Sackbohrung 35 durch die Kanäle 36, 38 in das Wälzlager und schmiert dieses. Durch den dichten Sitz des Wälzlagers an den Lagerpartnern kann das durch nachgepresstes Fett aus dem Wälzlager herausgepresste Schmierfett nur zur Unterseite des Wälzlagers in die Schmiermittelkammer 20 entweichen. Dort wird dieses Fett noch zur Schmierung des Pitch-Antriebs verwendet.

Wie aus Figur 3 entnehmbar ist, sind über den Umfang des Wälzlagers 6 solche Sackbohrungen verteilt. Daraus ergibt sich, dass das Wälzlager 18 an diesen sechs über den Umfang verteilten Stellen frisches Schmierfett enthält und dass das alte Schmierfett an etwa diesen sechs über den Umfang verteilten Positionen nach außen in die Schmiermittelkammer austritt. Dadurch wird eine Schmierung des Blattverstellantriebs über den gesamten Umfang erreicht.

Wie aus den Figuren 3 und 4 der Beschreibung deutlich wird, ist die Schmiermittelkammer 20 nicht etwa ein Schmiermittelbard, welches die Schmierung des Blattverstellantriebs einerseits und des Wälzlagers andererseits bewirkt, sondem das frische Schmierfett wird zuerst dem Wälzlager 18 zugeführt und wenn es dort austritt wird es noch zur Schmierung des Blattverstellantriebs verwendet. Ein entgegengerichteter Fluss des Schmiermittels könnte Partikel aus dem Blattverstellantrieb in das Wälzlager 18 transportieren und so zu einer Beschädigung des Wälzlagers führen, die unbedingt zu vermeiden ist. Das bedeutet, dass der Weg des Schmiermittels in eine Richtung im Sinne einer "Einbahnstraße" verläuft, die nur vom Wälzlager in die Schmiermittelkammer 20 aber nicht zurückgeführt wird.

## Patentansprüche

1. Vorrichtung zum Verdrehen eines Rotorblattes (4) einer Windenergieanlage gegen eine Nabe (8) der Windenergieanlage mit einer Lagerung zwischen den Bauteilen und mit einem Zahnrad-Antrieb zum Betätigen der Verdrehung, zum Einstellen des Pitch-Winkels des Rotorblattes (4),
**dadurch gekennzeichnet, dass** ein Zahnrad (16) des Antriebs (10, 12, 14) und die Lagerung (18) im volumenbereich einer Schmiermittelkammer (20) angeordnet sind und dass eine Schmiermittel-Zuführung durch die Lagerung (18) erfolgt

2. Vorrichtung nach Anspruch 1,
**dadurch gekennzeichnet, dass** die Lagerung (18) und das Zahnrad (16) koaxial angeordnet sind.

3. Vorrichtung nach einem der vorhergehenden Ansprüche,
**dadurch gekennzeichnet**, die Lagerung (18) und das Zahnrad (16) im Wesentlichen in einer zu ihrer Achse (6) senkrechten Ebene angeordnet sind.

4. Vorrichtung nach einem der vorhergehenden Ansprüche,
**dadurch gekennzeichnet, dass** die Lagerung ein Wälzlager (18) ist.

5. Vorrichtung nach Anspruch 5,
**dadurch gekennzeichnet, dass** die Lagerung ein zweireihiges Kugellager (18) ist.

6. Vorrichtung nach einem der vorstehenden Ansprüche,
**gekennzeichnet durch** eine Schmiermittel-Zuführung **durch** das Lager (18).

7. Vorrichtung nach einem der vorstehenden Ansprüche,
**dadurch gekennzeichnet, dass** ein Schmiermittelreservoir (32) ausgebildet ist, welches über eine Zuführleitung (34) mit dem Lager (18) verbunden ist.

8. Vorrichtung nach Anspruch 7,
**dadurch gekennzeichnet, dass** unverbrauchtes Schmiermittel zunächst aus dem Schmiermittelreservoir dem Lager zugeführt wird und nach Gebrauch aus dem Lager der Schmiermittelkammer zuführbar ist.

9. Vorrichtung nach Anspruch 8,
**dadurch gekennzeichnet, dass** die Zuführung vom Schmiermittel aus der Schmiermittelkammer zurück zur Lagerung nicht möglich ist.

## Claims

1. Apparatus for rotating a rotor blade (4) of a wind power installation relative to a hub (8) of the wind power installation, comprising a bearing arrangement between the components, and a gear drive for actuation of the rotary movement for adjusting the pitch angle of the rotor blade (4), **characterised in that** a gear (16) of the drive (10, 12, 14) and the bearing arrangement (18) are arranged in the volume region of a lubricant chamber (20) and **in that** a lubricant feed is effected through the bearing arrangement (18).

2. Apparatus according to claim 1, **characterised in that** the bearing arrangement (18) and the gear (16) are arranged coaxially.

3. Apparatus according to either one of the preceding claims, **characterised in that** the bearing arrangement (18) and the gear (16) are substantially arranged in a plane perpendicular to their axis (6).

4. Apparatus according to any one of the preceding claims, **characterised in that** the bearing arrangement is a rolling bearing (18).

5. Apparatus according to claim 5, **characterised in that** the bearing arrangement is a double-row ball bearing (18).

6. Apparatus according to any one of the preceding claims, **characterised by** a lubricant feed through the bearing (18).

7. Apparatus according to any one of the preceding claims, **characterised in that** a lubricant reservoir (32) is formed which communicates with the bearing (18) by way of a feed duct (34).

8. Apparatus according to claim 7, **characterised in that** unused lubricant is first fed from the lubricant reservoir to the bearing and, after use, can be fed from the bearing to the lubricant chamber.

9. Apparatus according to claim 8, **characterised in that** the feed of lubricant from the lubricant chamber back to the bearing arrangement is not possible.

## Revendications

1. Dispositif destiné à faire tourner une pale de rotor (4) d'une éolienne contre un moyeu (3) de l'éolienne avec un palier entre les composants et un entraînement à roue dentée destiné à actionner la rotation, à régler l'angle d'attaque de la pale de rotor (4), **caractérisé en ce qu'**une roue dentée (16) de l'entraînement (10, 12, 14) et le palier (18) sont disposés dans la zone de volume d'une chambre de lubrifiant (20) et **en ce qu'**une amenée de lubrifiant s'effectue par l'intermédiaire du palier (18).

2. Dispositif selon la revendication 1, **caractérisé en ce que** le palier (18) et la roue dentée (16) sont disposés d'une manière coaxiale.

3. Dispositif selon l'une quelconque des revendications précédentes, **caractérisé en ce que** le palier (18) et la roue dentée (16) sont disposés sensiblement dans un plan perpendiculaire à leur axe (6).

4. Dispositif selon l'une quelconque des revendications précédentes, **caractérisé en ce que** le palier est un palier à roulement (18).

5. Dispositif selon la revendication 5, **caractérisé en ce que** le palier est un roulement à billes à deux rangées (18).

6. Dispositif selon l'une quelconque des revendications précédentes, **caractérisé par** une amenée de lubrifiant à travers le palier (18).

7. Dispositif selon l'une quelconque des revendications précédentes, **caractérisé en ce qu'**il est conçu un réservoir de lubrifiant (32), lequel est relié par l'intermédiaire d'une conduite d'amenée (34) au palier (18).

8. Dispositif selon la revendication 7, **caractérisé en ce que** le lubrifiant non utilisé est d'abord amené depuis le réservoir de lubrifiant au palier et peut être amené, après avoir été utilisé, depuis le palier à la chambre de lubrifiant.

9. Dispositif selon la revendication 8, **caractérisé en ce que** l'amenée de lubrifiant depuis la chambre de lubrifiant à nouveau jusqu'au palier n'est pas possible.
